# EUROPÄISCHE PATENTANMELDUNG

(11) **EP 4 450 426 A1**
(43) Veröffentlichungstag der Anmeldung: **23.10.2024**
(21) Anmeldenummer: 24167321.9
(22) Anmeldetag: 28.03.2024
(51) Int. Cl.: B65G 11/02, B65G 11/20, B65G 21/20, B65G 35/00, B65G 47/22

(54) **VORRICHTUNG UND VERFAHREN ZUM TRANSPORTIEREN VON KUNSTSTOFFVORFORMLINGEN MIT STÖRUNGSBESEITIGUNG**

(30) Priorität: 18.04.2023 DE 102023109658
(71) Anmelder: Krones AG, 93073 Neutraubling (DE)
(72) Erfinder: Beutl, Juergen, 93073 Neutraubling (DE)
(74) Vertreter: Bittner, Bernhard

(57) **Zusammenfassung**

Vorrichtung (1) zum Transportieren von Kunststoffvorformlingen (10), mit einem ersten Transportelement (2), welches sich entlang eines Transportpfads (P) der Kunststoffvorformlinge (10) erstreckt und mit einem zweiten Transportelement (4), welches sich parallel zu dem ersten Transportelement (2) erstreckt, wobei das erste Transportelement (2) und das zweite Transportelement (4) derart voneinander beabstandet sind, dass zwischen dem ersten Transportelement (2) und dem zweiten Transportelement (4) ein Spalt (S) derart ausgebildet ist, dass ein Grundkörper (10a) der Kunststoffvorformlinge (10) durch diesen Spalt (S) treten kann, jedoch ein Tragring (10b) der Kunststoffvorformlinge (10) nicht durch diesen Spalt treten kann, wobei die Vorrichtung weiterhin eine Niederhaltereinrichtung (6) aufweist, welche oberhalb der Transportelemente (2, 4) und/oder oberhalb der Mündungen der Kunststoffvorformlinge (10) angeordnet ist, dadurch gekennzeichnet, dass die Niederhaltereinrichtung (6) ein in einer Längsrichtung der Kunststoffvorformlinge in zwei einander entgegengesetzte Richtungen bewegliches erstes Niederhalterelement (62) aufweist sowie eine Antriebseinrichtung (68) welche dazu geeignet und bestimmt ist, diese Bewegungen während eines Transportbetriebs der Vorrichtung zu verursachen.

## Beschreibung

Die vorliegende Erfindung bezieht sich auf eine Vorrichtung und ein Verfahren zum Transportieren von Kunststoffvorformlingen. Aus dem Stand der Technik ist es bekannt, dass Kunststoffvorformlinge zunächst erwärmt werden und anschließend mit einer Umformungseinrichtung wie beispielsweise einer Streckblasmaschine zu Kunststoffbehältnissen umgeformt werden. Hierzu ist es erforderlich, dass die Kunststoffvorformlinge ausgehend beispielsweise von einer Schütte vereinzelt werden und in einem geordneten Transport gebracht werden. Zu diesem Zweck werden beispielsweise sogenannte Rollensortierer eingesetzt, welche zwei drehbare Rollen aufweisen, zwischen denen die Kunststoffvorformlinge transportiert werden. Daneben sind jedoch auch Transportschienen bekannt, welche die Kunststoffvorformlinge transportieren.

Üblicherweise werden dabei die Kunststoffvorformlinge zwischen zwei Schienen transportiert, wobei sich ein Tragring der Kunststoffvorformlinge auf diesen Schienen abstützt und die Grundkörper der Kunststoffvorformlinge durch diese Schienen hindurchragen. Insbesondere bei hohen Transportgeschwindigkeiten kommt es dazu, dass die Kunststoffvorformlinge nicht völlig gleichmäßig auf den Schienen liegen, sondern verkannten oder schwenken können. Dies kann Störungen im Transport verursachen.

Zu diesem Zweck ist es aus dem Stand der Technik bekannt, die Kunststoffvorformlinge auch durch einen Niederhalter, der üblicherweise oberhalb derselben angeordnet ist, zu führen. In diesem Bereich treten bisweilen Störungen auf. Aus dem Stand der Technik ist jedoch keine Störungsbeseitigung insbesondere in einem Ablauf bzw. einer Ablaufgarnitur von einem Rollensortierer bekannt. Sollte es zu Verkeilungen der Kunststoffvorformlinge in diesem Garniturenbereich kommen, müssen diese von Hand gelöst werden.

Der vorliegenden Erfindung liegt daher die Aufgabe zugrunde, insbesondere die Störungsbeseitigung bei derartigen Transporteinrichtungen zu ermöglichen.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Transportieren von Kunststoffvorformlingen weist ein erstes Transportelement und insbesondere eine erste Transportschiene auf, welches sich entlang eines Transportpfads der Kunststoffvorformlinge erstreckt. Weiterhin weist die Vorrichtung ein zweites Transportelement und insbesondere eine zweite Transportschiene auf, welches sich parallel zu dem ersten Transportelement erstreckt, wobei das erste Transportelement und das zweite Transportelement derart voneinander beabstandet sind, dass zwischen dem ersten Transportelement und dem zweiten Transportelement ein Spalt ausgebildet ist, derart, dass ein Grundkörper der Kunststoffvorformlinge durch diesen Spalt treten kann, jedoch ein Tragring und/oder ein Gewinde der Kunststoffvorformlinge nicht durch diesen Spalt treten kann.

Weiterhin weist die Vorrichtung eine Niederhaltereinrichtung auf, welche oberhalb der Transportelemente und/oder oberhalb der Mündungen der Kunststoffvorformlinge angeordnet ist.

Erfindungsgemäß weist die Niederhaltereinrichtung ein in einer Längsrichtung der Kunststoffvorformlinge in zwei einander entgegengesetzte Richtungen bewegliches erstes Niederhalterelement auf, sowie eine Antriebseinrichtung, welche dazu geeignet und bestimmt ist, diese Bewegungen wenigstens zeitweise während des Transportbetriebs der Vorrichtung zu verursachen.

Besonders bevorzugt erstreckt sich dieses erste Niederhalterelement auch in der Transportrichtung der Kunststoffvorformlinge. Besonders bevorzugt erstreckt sich dieses erste Niederhalterelement parallel zu den genannten Transportelementen.

Bei einer besonders bevorzugten Ausführungsform sind die Transportelemente auch in einer Höhenrichtung und insbesondere in der Längsrichtung der zu transportierenden Kunststoffvorformlinge verstellbar. Besonders bevorzugt erfolgt jedoch eine derartige Verstellung außerhalb eines Arbeitsbetriebs der Vorrichtung.

Bevorzugt ist der zwischen den Transportelementen gebildete Spalt veränderbar und/oder ein seitlicher Abstand zwischen den Transportelementen ist veränderbar.

Bei einer weiteren vorteilhaften Ausführungsform ist die Antriebseinrichtung dazu geeignet und bestimmt, periodische Bewegungen des ersten Niederhalterelements zu erzeugen und/oder kreisförmige Bewegungen des ersten Niederhalterelements zu erzeugen wobei besonders bevorzugt in diesem Fall eine Ebene dieser kreisförmigen vertikal ausgerichtet ist. Besonders bevorzugt sich diese Ebene der kreisförmigen Bewegung in der Transportrichtung der Kunststoffvorformlinge oder parallel hierzu ausgerichtet.

Bevorzugt handelt es sich bei der Antriebseinrichtung um einen Elektromotor und insbesondere um einen Motor mit einem Rotationsabtrieb.

Bei einer weiteren vorteilhaften Ausführungsform weist die Antriebseinrichtung ein Exzenterelement und/oder einen Pleuelantrieb auf.

Bei einer weiteren vorteilhaften Ausführungsform weist die Antriebseinrichtung ein zweites Niederhalterelement auf und das erste Niederhalterelement ist bezüglich des zweiten Niederhalterelements beweglich angeordnet. Bevorzugt ist das zweite Niederhalterelement bezüglich des ersten Niederhalterelements (zumindest auch) in der senkrechten und/oder vertikalen Richtung beweglich angeordnet.

Bei einer weiteren vorteilhaften Ausführungsform ist das zweite Niederhalterelement stationär angeordnet. Insbesondere ist das zweite Niederhalteelement stationär gegenüber den Transportelementen angeordnet.

Bei einer bevorzugten Ausführungsform weist das zweite Niederhalterelement wenigstens eine erste Kontaktfläche auf, welche dazu geeignet und bestimmt ist, Abschnitte der Kunststoffvorformlinge zu kontaktieren. Bevorzugt erstreckt sich diese Kontaktfläche wenigstens abschnittsweise entlang des Transportpfads der Kunststoffvorformlinge.

Bei einer bevorzugten Ausführungsform weist das zweite Niederhalterelement eine zweite Kontaktfläche auf, welche dazu geeignet und bestimmt ist, Abschnitte der Kunststoffvorformlinge zu kontaktieren. Bevorzugt erstreckt sich diese zweite Kontaktfläche wenigstens abschnittsweise entlang des Transportpfads der Kunststoffvorformlinge.

Bei einer bevorzugten Ausführungsform sind die erste und die zweite Kontaktfläche des zweiten Niederhalterelement voneinander beabstandet.

Bevorzugt verlaufen die beiden Kontaktflächen des zweiten Niederhalterelements schräg gegenüber einer Transportebene der Kunststoffvorformlinge und/oder schräg gegenüber einer Stützebene, welche von den beiden Transportelementen ausgebildet wird.

Bevorzugt ist einer Kontaktfläche des ersten Niederhalterelements zwischen den wenigstens zwei Kontaktflächen des zweiten Niederhalterelements angeordnet.

Bevorzugt ist daher bei dem Niederhalter bzw. der Niederhaltereinrichtung ein weiteres Niederhalterelement hinzugefügt, insbesondere zusätzlich zu dem stationären (hier dem zweiten) Niederhalterelement. Dieses zweite Niederhalterelement unterliegt bevorzugt einer periodischen Bewegung und/oder einer Kreisbewegung, insbesondere in der Bewegungsrichtung der Kunststoffvorformlinge.

Bevorzugt ist eine Berührungsfläche und/oder ein Berührungsbereich des zweiten Niederhalterelements (d.h. eine Berührungsfläche und/oder ein Berührungsbereich, welche die Kunststoffvorformlinge zeitweise berührt oder dazu geeignet ist), zeitweise bzw. teilweise oberhalb und zeitweise bzw. teilweise unterhalb der Berührungsfläche des ersten Niederhalterelements.

Besonders bevorzugt bildet daher das zweite Niederhalterelement eine Berührungsfläche aus, welche dazu bestimmt ist, die Mündungen und insbesondere die Mündungsränder der Kunststoffvorformlinge zu berühren. Besonders bevorzugt bildet auch das erste Niederhalterelement eine derartige Berührungsfläche aus, welche die Kunststoffvorformlinge bzw. deren Mündungen berühren kann. Wie ausgeführt, liegt diese Berührungsfläche des zweiten Niederhalterelements teilweise oberhalb und zeitweise unterhalb der Berührungsfläche des zweiten Niederhalterelements.

Auf diese Weise verändert sich der Höhenabstand von dem ersten Niederhalterelement zu dem zweiten Niederhalterelement. Sollte sich ein Kunststoffvorformling in den zweiten Niederhalterelement verkeilen, so kann diese Verkeilung durch das Niederdrücken des Kunststoffvorformlings durch das erste Niederhalterelement gelöst werden.

Auf diese Weise wird eine automatische Störbeseitigung bei den Garnituren und insbesondere in der hier beschriebenen Transportvorrichtung erreicht.

Bei einer weiteren vorteilhaften Ausführungsform weist das zweite Niederhalterelement eine Ausnehmung auf und das erste Niederhalterelement ist in dieser Ausnehmung (insbesondere beweglich) angeordnet. Dabei ist es möglich, dass das zweite Niederhalterelement einen Spalt ausbildet, innerhalb dessen das erste Niederhalterelement angeordnet und/oder beweglich angeordnet ist.

Bei einer weiteren vorteilhaften Ausführungsform ist das erste Transportelement und/oder das zweite Transportelement als Transportschiene ausgebildet. Besonders bevorzugt sind beide Transportelemente als Transportschienen ausgebildet.

Besonders bevorzugt erweitert sich der oben genannte Spalt, durch den der Grundkörper der Kunststoffvorformlinge treten kann, unterhalb der Oberflächen der jeweiligen Tragelemente nach unten. Auf diese Weise kann ein stabilerer bzw. störungsfreierer Transport der Kunststoffvorformlinge erreicht werden. Besonders bevorzugt erweitert sich der genannte Spalt nach unten hin und erweitert sich insbesondere kegelförmig bzw. kegelstumpfförmig.

Bei einer weiteren bevorzugten Ausführungsform führt das erste Niederhalterelement in wenigstens einem Abschnitt und insbesondere in einem Endabschnitt und/oder in einem Abschnitt, welcher die Kunststoffvorformlinge kontaktiert, einen Hub aus, der größer ist als 0,1 cm bevorzugt größer als 0,2 cm, bevorzugt größer als 0,3 cm, bevorzugt größer als 0,4 cm, bevorzugt größer als 0,5 cm, bevorzugt größer als 0,6 cm und bevorzugt größer als 0,7 cm.

Bei einer weiteren bevorzugten Ausführungsform führt das erste Niederhalterelement in wenigstens einem Abschnitt und insbesondere in einem Endabschnitt und/oder einem Abschnitt, welcher die Kunststoffvorformlinge kontaktiert, einen Hub aus, der geringer ist als 10 cm, bevorzugt geringer als 8 cm, bevorzugt geringer als 6 cm, bevorzugt geringer als 5 cm, bevorzugt geringer als 4 cm, bevorzugt geringer als 3 cm und bevorzugt geringer als 2 cm.

Es hat sich gezeigt, dass Hübe in diesem Bereich sehr gut geeignet sind, um auftretende Störungen sicher zu beseitigen.

Bei einer weiteren vorteilhaften Ausführungsform weist die Transporteinrichtung eine weitere Transporteinheit zum Transportieren der Kunststoffvorformlinge auf, wobei diese Transporteinheit bevorzugt eine erste um eine erste Drehachse drehbare Transportrolle und eine zweite um eine zweite Drehachse drehbare Transportrolle aufweist und bevorzugt zwischen dieser ersten Transportrolle der zweiten Transportrolle ein Spalt ausgebildet ist, durch welchen die Grundkörper der Kunststoffvorformlinge treten oder treten können, nicht jedoch ein Tragring der Kunststoffvorformlinge.

Bevorzugt handelt es sich hierbei um einen sogenannten Rollensortierer, welcher bevorzugt der oben beschriebenen Vorrichtung vorangestellt ist. Bevorzugt ist daher die besagte Transporteinheit vor den oben erwähnten Transportelementen angeordnet.

Die vorliegende Erfindung ist weiterhin auf eine Anordnung zum Behandeln von Kunststoffbehältnissen mit einer Vorrichtung der oben beschriebenen Art gerichtet. Weiterhin weist die Anordnung eine Vorrichtung zum Erwärmen von Kunststoffvorformlingen auf, welche bevorzugt der oben beschriebenen Vorrichtung in der Transporteinrichtung der Kunststoffvorformlinge nachgeordnet ist.

Die vorliegende Erfindung ist weiterhin auf ein Verfahren zum Transportieren von Kunststoffvorformlingen gerichtet, wobei die Kunststoffvorformlinge entlang eines ersten Transportelements, welches sich entlang eines Transportpfads der Kunststoffvorformlinge erstreckt transportiert und/oder gefördert werden sowie auch entlang eines zweiten Transportelements, welches sich parallel zu dem ersten Transportelement erstreckt, wobei das erste Transportelement und das zweite Transportelement derart voneinander beabstandet sind, dass zwischen dem ersten Transportelement und dem zweiten Transportelement ein Spalt derart ausgebildet wird, dass ein Grundkörper der Kunststoffvorformlinge durch diesen Spalt tritt, jedoch ein Tragring und/oder ein Gewinde der Kunststoffvorformlinge nicht durch diesen Spalt tritt und/oder von den Transportelementen zurückgehalten wird.

Dabei weist die Vorrichtung weiterhin eine Niederhaltereinrichtung auf, welche oberhalb der Transportelemente und/oder oberhalb der Mündungen der Kunststoffvorformlinge angeordnet ist und welche wenigstens zeitweise die Kunststoffvorformlinge kontaktiert und/oder führt.

Erfindungsgemäß weist die Niederhaltereinrichtung einen in einer Längsrichtung der Kunststoffvorformlinge in zwei entgegengesetzte Richtungen bewegliches Niederhalterelement auf, sowie eine Antriebseinrichtung, welche diese Bewegungen während des Transportbetriebs der Vorrichtung verursacht.

Es wird daher auch verfahrensseitig vorgeschlagen, dass ein bewegliches Niederhalterelement und insbesondere ein periodisch bewegliches Niederhalterelement vorgesehen ist, welches zur Störungsbeseitigung dient.

Es ist dabei möglich, dass sich dieses Niederhalterelement ständig während des Betriebs der Vorrichtung und/oder während des Transports der Kunststoffvorformlinge bewegt. Es wäre jedoch auch möglich, dass diese Bewegung nur ausgelöst wird, wenn eine Störung wie etwa ein Verklemmen der Kunststoffvorformlinge erfasst und/oder festgestellt wird.

Besonders bevorzugt wird das Niederhalterelement periodisch bewegt. Bevorzugt bewegt sich das Niederhalterelement kreisförmig.

Besonders bevorzugt werden die Kunststoffvorformlinge in einer geradlinigen Richtung transportiert.

Besonders bevorzugt wird das Niederhalterelement mit einem exzentrischen Antrieb bzw. einem Exzenterantrieb bewegt.

Bei einer weiteren bevorzugten Ausführungsform werden die Kunststoffvorformlinge weiterhin von einem zweiten Niederhalterelement transportiert bzw. geführt, wobei dieses zweite Niederhalterelement bevorzugt stationär bezüglich des Transportpfads der Kunststoffvorformlinge angeordnet ist.

Weitere Vorteile und Ausführungsformen ergeben sich aus den beigefügten Zeichnungen:
Darin zeigen:
- Fig. 1: eine Darstellung einer erfindungsgemäßen Vorrichtung; und
- Fig. 2: eine Darstellung der Vorrichtung mit einem vorgeordneten Rollensortierer.

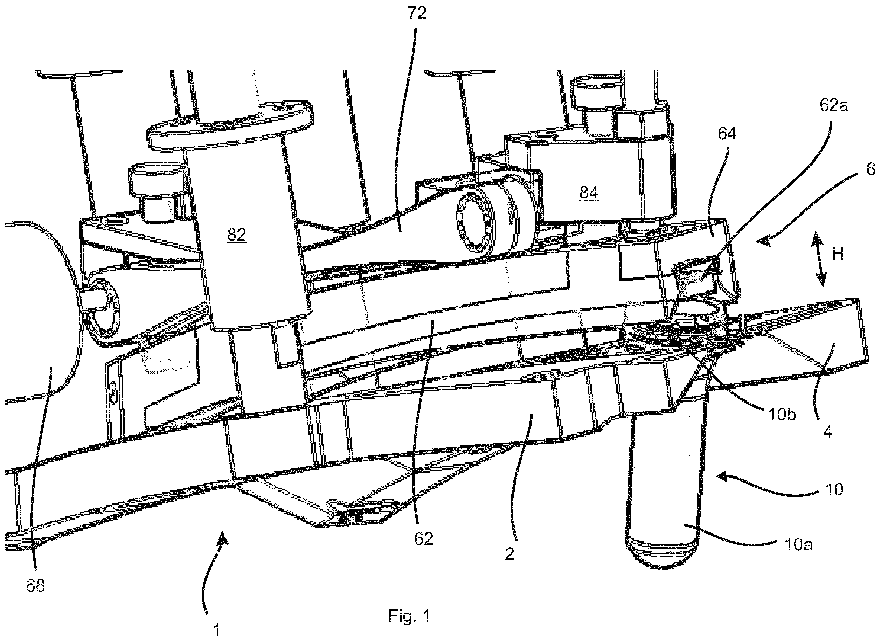

Fig. 1 zeigt eine Darstellung einer erfindungsgemäßen Transportvorrichtung. Dabei ist ein erstes Transportelement 2 in Form einer ersten Transportschiene vorgesehen sowie ein zweites Transportelement 4 in Form einer zweiten Transportschiene. Zwischen diesen beiden Transportelementen 2, 4 werden Kunststoffvorformlinge 10 transportiert. Dabei kann ein Grundkörper 10a der Kunststoffvorformlinge durch den zwischen den Transportelementen 2, 4 gebildeten Spalt treten, nicht jedoch der Tragring 10b der Kunststoffvorformlinge.

Das Bezugszeichen 6 kennzeichnet in seiner Gesamtheit eine Niederhaltereinrichtung, welche die Kunststoffvorformlinge während ihrer Bewegung bzw. während des Transports führt.

Die Niederhaltereinrichtung 6 weist ein erstes Niederhalterelement 62 auf, welches beweglich ausgestaltet ist. Daneben weist die Niederhaltereinrichtung 6 ein zweites Niederhalterelement 64 auf, welches unbeweglich bzw. fest angeordnet ist. Bevorzugt bilden sowohl das erste Niederhalterelement 62 also auch das zweite Niederhalterelement 64 Kontaktflächen aus, welche dazu geeignet und bestimmt sind, die Kunststoffvorformlinge bzw. deren Mündungen zu kontaktieren.

Das erste Niederhalterelement ist in einer Ausnehmung des zweiten Niederhalterelements 64 geführt bzw. angeordnet.

Bei einer bevorzugten Ausführungsform verläuft eine Kontaktfläche des ersten Niederhalterelements parallel zu einer Mündungsfläche der Kunststoffvorformlinge, genauer einer Mündungsfläche der Kunststoffvorformlinge, wenn diese in einer Sollposition transportiert werden.

Bevorzugt verläuft eine Kontaktfläche des ersten Niederhalterelements in einer Ebene, welche parallel zu einer von den Transportelementen 2, 4 gebildeten Stützebene ist, in welcher die Kunststoffvorformlinge transportiert werden und/oder in welcher deren Tragringe abgestützt werden.

Bevorzugt ist eine Kontaktfläche des zweiten Niederhalterelements 64 abgeschrägt. Besonders bevorzugt weist das zweite Niederhalterelement zwei Kontaktflächen auf, zwischen denen die Kunststoffvorformlinge 10 geführt werden. Bevorzugt laufen diese Kontaktflächen dabei in der Längsrichtung der Kunststoffvorformlinge nach oben hin aufeinander zu.

Bevorzugt verläuft wenigstens eine Kontaktfläche des zweiten Niederhalterelements schräg zu einer von den Transportelementen 2, 4 gebildeten Stützebene, in welcher die Kunststoffvorformlinge transportiert werden und/oder in welcher deren Tragringe abgestützt werden.

Das Bezugszeichen 68 kennzeichnet eine Antriebseinrichtung, welche über eine Pleuelstange 72 eine Bewegung des ersten Niederhalterelements 62 in der Richtung H bewirkt. Dabei handelt es sich hier, wie oben erwähnt, um eine periodische Bewegung, die von der Antriebseinrichtung 68, bei der es sich insbesondere um einen Elektromotor handelt, initiiert wird.

Das Bezugszeichen 82 kennzeichnet einen Träger, an dem das Transportelement 2 angeordnet ist. Auf diese Weise kann auch eine Höhenstellung des Transportelements 2 verändert werden.

Auf der rückwärtigen Seite der Vorrichtung findet sich ein weiterer zum Halten des Transportelements 4.

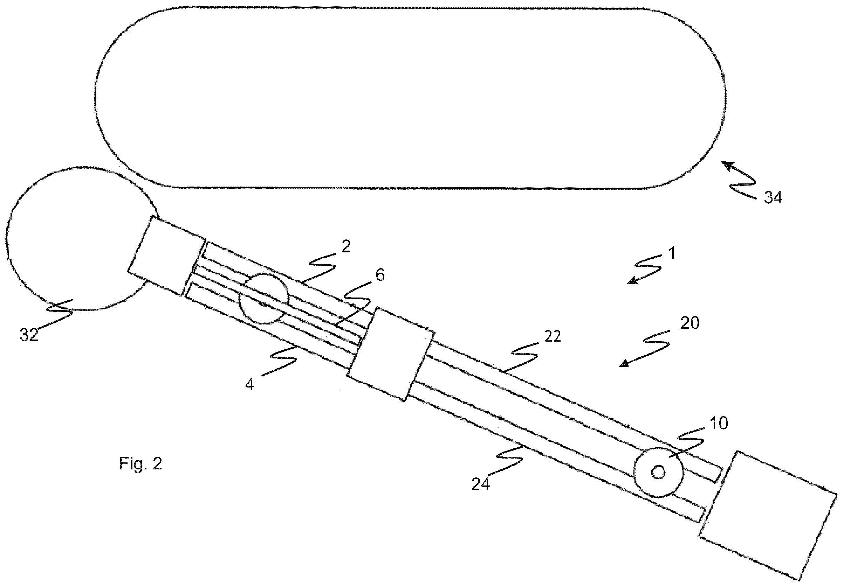

Fig. 2 zeigt eine weitere Ansicht einer erfindungsgemäßen Transportvorrichtung 1. Hier ist auch eine optionale Transporteinheit 20 vorgesehen, welche bevorzugt vorangestellt ist.

Besonders bevorzugt weist diese Transporteinheit 20 eine erste drehbare Rolle 22 und eine zweite drehbare Rolle 24 auf. Die Kunststoffvorformlinge werden zwischen diesen Rollen 22, 24 transportiert, wodurch bevorzugt auch eine Ausrichtung bewirkt wird.

Bevorzugt erstreckt sich das Transportelement 2 in der Richtung der ersten drehbaren Rolle. Bevorzugt erstreckt sich das Transportelement 4 in der Richtung der zweiten drehbaren Rolle.

Bei einer weiteren bevorzugten Ausführungsform ist der Abstand zwischen der ersten drehbaren Rolle 22 und der zweiten drehbaren Rolle 24 genauso groß wie der Abstand zwischen dem ersten Transportelement 2 und dem zweiten Transportelement 4.

Die Vorrichtung 1 übergibt bevorzugt die Kunststoffvorformlinge an eine Eintakteinrichtung wie einen Eintaktstern und dieser Eintaktstern führt die Kunststoffvorformlinge wiederum bevorzugt einer Erwärmungseinrichtung zum Erwärmen dieser Kunststoffvorformlinge zu.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Transportieren von Kunststoffvorformlingen (10), mit einem ersten Transportelement (2), welches sich entlang eines Transportpfads (P) der Kunststoffvorformlinge (10) erstreckt und mit einem zweiten Transportelement (4), welches sich parallel zu dem ersten Transportelement (2) erstreckt, wobei das erste Transportelement (2) und das zweite Transportelement (4) derart voneinander beabstandet sind, dass zwischen dem ersten Transportelement (2) und dem zweiten Transportelement (4) ein Spalt (S) derart ausgebildet ist, dass ein Grundkörper (10a) der Kunststoffvorformlinge (10) durch diesen Spalt (S) treten kann, jedoch ein Tragring (10b) der Kunststoffvorformlinge (10) nicht durch diesen Spalt treten kann, wobei die Vorrichtung weiterhin eine Niederhaltereinrichtung (6) aufweist, welche oberhalb der Transportelemente (2, 4) und/oder oberhalb der Mündungen der Kunststoffvorformlinge (10) angeordnet ist,
**dadurch gekennzeichnet, dass**
die Niederhaltereinrichtung (6) ein in einer Längsrichtung der Kunststoffvorformlinge in zwei einander entgegengesetzte Richtungen bewegliches erstes Niederhalterelement (62) aufweist sowie eine Antriebseinrichtung (68) welche dazu geeignet und bestimmt ist, diese Bewegungen während eines Transportbetriebs der Vorrichtung zu verursachen.

2. Vorrichtung (1) nach Anspruch 1,
**dadurch gekennzeichnet, dass**
die Antriebseinrichtung (68) dazu geeignet und bestimmt ist, periodische Bewegungen des ersten Niederhalterelements (62) zu erzeugen und/oder die Antriebseinrichtung (68) dazu geeignet und bestimmt ist kreisförmige Bewegungen des ersten Niederhalterelements (62) zu erzeugen.

3. Vorrichtung (1) nach wenigstens einem der vorangegangenen Ansprüche,
**dadurch gekennzeichnet, dass**
die Vorrichtung (1) ein zweites Niederhalterelement (64) aufweist und das erste Niederhalterelement (62) bezüglich des zweiten Niederhalterelements (64) beweglich angeordnet.

4. Vorrichtung (1) nach dem vorangegangenen Anspruch,
**dadurch gekennzeichnet, dass**
das zweite Niederhalterelement (64) stationär angeordnet ist.

5. Vorrichtung (1) nach einem der vorangegangen Ansprüche 3 - 4,
**dadurch gekennzeichnet, dass**
das zweite Niederhalterelement (64) eine Ausnehmung aufweist und das erste Niederhalterelement in dieser Ausnehmung angeordnet ist.

6. Vorrichtung (1) nach wenigstens einem der vorangegangenen Ansprüche,
**dadurch gekennzeichnet, dass**
das erste Transportelement (2) und/oder das zweite (4) Transportelement als Transportschiene ausgebildet ist.

7. Vorrichtung (1) nach wenigstens einem der vorangegangenen Ansprüche,
**dadurch gekennzeichnet, dass**
das erste Niederhalterelement (62) relativ zum zweiten Niederhalterelement (64) einen Hub ausführt, der größer ist als 0,1 cm, bevorzugt größer als 0,2cm, bevorzugt größer als 0,3cm bevorzugt größer als 0,4cm, bevorzugt größer als 0,5cm, bevorzugt größer als 0,6cm, bevorzugt größer als 0,7cm und/oder das erste Niederhalterelement (62) relativ zum zweiten Niederhalterelement (64) einen Hub ausführt, der kleiner ist als 10cm, bevorzugt kleiner als 8cm, bevorzugt kleiner als 6cm, bevorzugt kleiner als 4cm, bevorzugt kleiner als 3cm und besonders bevorzugt kleiner als 2cm.

8. Vorrichtung (1) nach wenigstens einem der vorangegangenen Ansprüche,
**dadurch gekennzeichnet, dass**
die Transportvorrichtung eine Transporteinheit (20) zum Transportieren der Kunststoffvorformlinge aufweist, wobei diese Transporteinheit (20) eine erste um eine erste Drehachse drehbare Transportrolle (22) und eine zweite um eine zweite Drehachse drehbare Transportrolle (24) aufweist und bevorzugt zwischen dieser ersten Transportrolle (22) und der zweiten Transportrolle (24) ein Spalt ausgebildet ist, durch welchen ein Grundkörper des Kunststoffvorformlings (10) tritt, nicht jedoch ein Tragring der Kunststoffvorformlinge (10).

9. Anordnung zum Behandeln von Kunststoffbehältnissen mit einer Vorrichtung nach wenigstens einem der vorangegangenen Ansprüche und einer Vorrichtung zum Erwärmen von Kunststoffvorformlingen, welche der Vorrichtung (1) in der Transportrichtung der Kunststoffvorformlinge nachgeordnet ist.

10. Verfahren zum Transportieren von Kunststoffvorformlingen (10), wobei die Kunststoffvorformlinge entlang eines ersten Transportelements (2), welches sich entlang eines Transportpfads (P) der Kunststoffvorformlinge (10) erstreckt gefördert werden sowie entlang eines zweiten Transportelements (4), welches sich parallel zu dem ersten Transportelement (2) erstreckt, wobei das erste Transportelement (2) und das zweite Transportelement (4) derart voneinander beabstandet sind, dass zwischen dem ersten Transportelement (2) und dem zweiten Transportelement (4) ein Spalt (S) derart ausgebildet wird, dass ein Grundkörper (10a) der Kunststoffvorformlinge (10) durch diesen Spalt (S) tritt, jedoch ein Tragring (10b) der Kunststoffvorformlinge (10) nicht durch diesen Spalt tritt, wobei die Vorrichtung weiterhin eine Niederhaltereinrichtung (6) aufweist, welche oberhalb der Transportelemente (2, 4) und/oder oberhalb der Mündungen der Kunststoffvorformlinge (10) angeordnet ist,
**dadurch gekennzeichnet, dass**
die Niederhaltereinrichtung (6) ein in einer Längsrichtung der Kunststoffvorformlinge in zwei einander entgegengesetzte Richtungen bewegliches erstes Niederhalterelement (62) aufweist sowie eine Antriebseinrichtung (68), welche diese Bewegungen während eines Transportbetriebs der Vorrichtung verursacht.
